**Europäisches Patentamt**

**European Patent Office**

**Office européen des brevets**

(11) Veröffentlichungsnummer: **0 334 171**
**A2**

## (12) EUROPÄISCHE PATENTANMELDUNG

(21) Anmeldenummer: 89104514.8

(51) Int. Cl.⁴: **B32B 27/08**

(22) Anmeldetag: 14.03.89

(30) Priorität: 22.03.88 DE 3809524

(43) Veröffentlichungstag der Anmeldung:
27.09.89 Patentblatt 89/39

(84) Benannte Vertragsstaaten:
**AT BE DE ES FR GB IT NL SE**

(71) Anmelder: **BAYER AG**

**D-5090 Leverkusen 1 Bayerwerk(DE)**

(72) Erfinder: **Wagner, Joachim, Dr.**
**Semmelweisstrasse 135**
**D-5000 Köln 80(DE)**
Erfinder: **Peltzer, Karl**
**Im Honnefeld 1**
**D-5653 Leichlingen 2(DE)**
Erfinder: **Rasshofer, Werner, Dr.**
**Leopold-Gmelin-Strasse 31**
**D-5000 Köln 80(DE)**

(54) Verfahren zur Herstellung von Verbundkörpern und die nach diesem Verfahren erhältlichen Verbundkörper.

(57) Ein Verfahren zur Herstellung von Verbundkörpern durch thermoplastische Formgebung eines Aufbaus, bestehend aus mindestens zwei schichtweise übereinanderliegenden, flächenförmigen, thermoplastisch verformbaren Kunststoffmaterialien und gegebenenfalls mindestens einer Ober-, Unter- und/oder Zwischenschicht aus einem Verstärkungs- oder Füllstoffmaterial, wobei mindestens eines der thermoplastisch verformbaren Kunststoffmaterialien durch Umsetzung von

a) aromatischen Polyisocyanaten,

b) Verbindungen mit einem Molekulargewicht zwischen 1800 und 12 000 mit (im statistischen Mittel) mindestens 2,5 gegenüber Isocyanatgruppen reaktionsfähigen Gruppen,
gegebenenfalls

c) aromatischen Diaminen des Molekulargewichtsbereichs 108 bis 400,
sowie gegebenenfalls

d) (Cyclo)-alkanpolyolen und/oder (Cyclo)-alkanpolyaminen des Molekulargewichtsbereichs 60 bis 1799,
sowie gegebenenfalls unter Mitverwendung von

e) an sich bekannten Hilfs- und Zusatzmitteln,
im Ein- oder Mehrstufenverfahren hergestellt worden ist, wobei mindestens eine der Komponenten c) oder d) in einer Menge von insgesamt mindestens 5 Gew.-%, bezogen auf das Gewicht der Komponente b) eingesetzt wird, und die nach diesem Verfahren erhältlichen Verbundkörper.

Xerox Copy Centre

EP 0 334 171 A2

# Verfahren zur Herstellung von Verbundkörpern und die nach diesem Verfahren erhältlichen Verbundkörper

Die vorliegende Erfindung betrifft ein neues Verfahren zur Herstellung von Verbundkörpern durch thermoplastische Formgebung eines Aufbaus, bestehend aus mindestens zwei flächenförmigen, schichtweise übereinanderliegenden, thermoplastisch verformbaren Kunststoffmaterialien und gegebenenfalls verstärkend wirkenden Unter-, Ober-und/oder Zwischenschichten, wobei die Kunststoffmaterialien zumindest teilweise aus ausgewählten Polyisocyanat-Polyadditionsprodukten bestehen, sowie die nach diesem Verfahren erhältlichen Verbundkörper.

Thermoplastische Polyurethanelastomere sind bekannt (vgl. z. B. Becker/Braun, Kunststoffhandbuch, Band 7, "Polyurethane", Carl Hanser Verlag, München/Wien (1983), Seiten 428 ff). Bei den bislang bekanntgewordenen, thermoplastisch verarbeitbaren Polyurethanelastomeren handelt es sich um solche auf Basis von Diisocyanaten, höhermolekularen Dihydroxyverbindungen, insbesondere höhermolekularen Polyesterdiolen und niedermolekularen Diolen als Kettenverlängerungsmitteln, wobei die Polyurethane möglichst linear aufgebaut, d.h. keine Vernetzungs- bzw. Verzweigungsstellen im Molekül aufweisen sollten. Auch von der Mitverwendung von Diaminen als Kettenverlängerungsmittel bei der Herstellung von thermoplastisch verarbeitbaren Polyurethanelastomeren hat man bislang abgeraten (vgl. das oben zitierte Handbuch, Seite 428, Absatz 8.2.1), da durch die Mitverwendung von Diamin-Kettenverlängerungsmittel Harnstoffgruppen in das Molekül eingebaut werden, die als Hartsegmente angesehen werden, die einer thermoplastischen Verarbeitbarkeit entgegenstehen.

Jetzt wurde jedoch überraschend gefunden, daß auch Polyisocyanat-Polyadditionsprodukte, die unter Mitverwendung von verzweigten, höhermolekularen Aufbaukomponenten mit gegenüber Isocyanatgruppen reaktionsfähigen Gruppen hergestellt worden sind, insbesondere auch solche, in denen die Anzahl der Harnstoffgruppen die Anzahl der Urethangruppen übersteigt, thermoplastisch verarbeitbar und insbesondere auch zur Herstellung von Verbundkörpern unter thermoplastischer Formgebung geeignet sind.

Gegenstand der Erfindung ist ein Verfahren zu Herstellung von Verbundkörpern durch thermoplastische Formgebung eines Aufbaus, bestehend aus mindestens zwei schichtweise übereinanderliegenden, flächenförmigen, thermoplastisch verformbaren Kunststoffmaterialien und gegebenenfalls mindestens einer Ober-, Unter- und/oder Zwischenschicht aus einem Verstärkungs- oder Füllstoffmaterial unter solchen Temperatur- und Druckbedingungen, daß die Formgebung unter gleichzeitig ablaufender, inniger Vereinigung der einzelnen Schichten des Aufbaus stattfindet, dadurch gekennzeichnet, daß mindestens eines der flächenförmigen Kunststoffmaterialien aus einem Polyisocyanat-Polyadditionsprodukt einer Dichte von mindestens 0,8 g.cm$^3$ besteht, welches durch Umsetzung von

a) aromatischen Polyisocyanaten,

b) Verbindungen mit einem Molekulargewicht zwischen 1800 und 12 000, welche im statistischen Mittel mindestens 2,5 gegenüber Isocyanatgruppen reaktionsfähige Gruppen aufweisen,
gegebenenfalls

c) Diaminen mit zwei primären und/oder sekundären, aromatisch gebundenen Aminogruppen des Molekulargewichtsbereichs 108 bis 400,
sowie gegebenenfalls

d) gegebenenfalls Ethergruppen aufweisenden (Cyclo)-alkanpolyolen und/oder (Cyclo)- alkanpolyaminen des Molekulargewichtsbereichs 60 bis 1799,
sowie gegebenenfalls unter Mitverwendung von

e) den aus der Polyurethanchemie an sich bekannten Hilfs- und Zusatzmitteln,
unter Einhaltung einer Isocyanatkennzahl von 60 bis 140 im Ein- oder Mehrstufenverfahren hergestellt worden ist, mit der Maßgabe, daß mindestens eine der Komponenten c) oder d) in einer solchen Menge mitverwendet wird, daß die Gesamtmenge der Komponenten c) und d) mindestens 5 Gew.-%, bezogen auf das Gewicht der Komponente b) beträgt.

Zur Durchführung des erfindungsgemäßen Verfahrens wird zunächst ein "Aufbau" hergestellt, der aus mindestens 2, vorzugsweise 2 bis 8 und besonders bevorzugt 2 bis 4 schichtweise übereinanderliegenden, thermoplastisch verformbaren Kunststoffteilen besteht, wobei der Aufbau gegebenenfalls noch zusätzlich Unter-, Ober- und/oder Zwischenschichten von Füllstoff- und insbesondere Verstärkungsmaterialien aufweisen kann. Der so beschaffene "Aufbau" wird einer thermoplastischen Formgebung unter solchen Temperatur- und Druckbedingungen zugeführt, daß gleichzeitig mit der thermoplastischen Verformung eine innige Vereinigung der einzelnen Schichten stattfindet, so daß ein stabiles Verbundsystem resultiert.

Die einzelnen Schichten des genannten Aufbaus weisen im allgemeinen eine Dicke von 0,01 bis 10, vorzugsweise 0,1 bis 5 mm auf, wobei dies jedoch keineswegs ein bezüglich der Durchführbarkeit des Verfahrens kritisches Merkmal darstellt. Selbstverständlich wäre es auch möglich, nach dem erfindungsgemäßen Prinzip beispielsweise ein dickwandiges Kunststoffteil mit einer vergleichsweise dünnen Kunststoffschicht zu einem Verbundkörper zu vereinigen. Besonders bevorzugt dient das erfindungs gemäße Verfahren zur Herstellung von mehrschichtigen, gegebenenfalls Verstärkermaterialien eingebaut enthaltenden Kunststofflaminaten einer Dicke von 0,1 bis 30, vorzugsweise 0,4 bis 10 mm.

Der erfindungswesentliche Punkt ist nun darin zu sehen, daß zumindestens eine, vorzugsweise mehrere und besonders bevorzugt alle der genannten, zur Herstellung des "Aufbaus" verwendeten Kunststoffmaterialien aus elastomeren Polyisocyanat-Polyadditionsprodukten des Dichtebereichs von 0,8 bis 1,4 g/cm$^3$ und insbesondere 1,0 bis 1,3 g/cm$^3$ bestehen, die aus den bereits genannten Ausgangsmaterialien und Hilfsmitteln a) bis e) hergestellt worden sind.

Geeignete aromatische Polyisocyanate a) sind insbesondere die in EP-B-00 81 701, Kolonne 3, Zeile 30 bis Kolonne 4, Zeile 25 genannten Verbindungen, wobei die dort als bevorzugt herausgestellten Polyisocyanate auch im Rahmen der vorliegenden Erfindung bevorzugt sind. Auch NCO-Semiprepolymere, wie sie durch Umsetzung von einfachen aromatischen Diisocyanaten von 4,4´-Diisocyanatodiphenylmethan mit unterschüssigen Mengen an höhermolekularen Polyhydroxylverbindungen der nachstehend unter b) genannten Art (NCO/OH-Äquivalentverhältnis >2) erhältlich sind, können als Komponente a) Verwendung finden.

Bei der Komponente b) handelt es sich um Verbindungen mit gegenüber Isocyanatgruppen reaktionsfähigen Gruppen des Molekulargewichtsbereichs 1800 bis 12 000, vorzugsweise 3000 bis 7000 oder um Gemische derartiger Verbin dungen, wobei die Komponente b) im Sinne der Isocyanat-Additionsreaktion eine über 2,5 liegende (mittlere) Funktionalität aufweist. Vorzugsweise liegt die (mittlere) Funktionalität der Komponente b) bei 2,5 bis 3,0, insbesondere bie 2,8 bis 3,0. Besonders gut als Komponente b) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47 offenbart sind, wobei auch erfindungsgemäß solche Polyetherpolyole bevorzugt sind, deren Hydroxylgruppen zumindest zu 50 % vorzugsweise zumindest zu 80 % aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den obengemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h. Polyether mit gegenüber Isocyanatgruppen reaktionsfähigen Gruppen, die zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40 genannten Verbindungen.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatische Diamine der in EP-B-00 81 701, Kolonne 5, Zeile 58 bis Kolonne 6, Zeile 34 beispielhaft genannten Art, wobei auch erfindungsgemäß die dort als bevorzugt herausgestellten Diamine bevorzugt sind.

Bei den gegebenenfalls als weitere Aufbaukomponenten d) mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50 offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bishydroxymethyl-cyclohexan.

Es ist ein wesentlicher Punkt, daß bei der Herstellung der Elastomeren mindestens eine der Komponenten c) oder d) zur Anwendung gelangt und zwar in solchen Mengen, daß der Gewichtsanteil der Komponenten c) und/oder d), bezogen auf das Gewicht der Komponente b), mindestens 5 Gew.-%, vorzugsweise mindestens 10 Gew.-% beträgt. Besonders bevorzugt werden die Elastomeren unter alleiniger Verwendung von aromatischen Diaminen der unter c) beispielhaft genannten Art hergestellt, wobei deren Menge und die Menge der in der Komponente b) gegebenenfalls vorliegenden Aminogruppen so bemessen wird, daß in den Elastomeren das Molverhältnis von Harnstoffgruppen zu Urethangruppen bei mindestens 2:1 liegt.

3

Bei den bei der Herstellung der Polyisocyanat-Polyadditionsprodukte gegebenenfalls mitzuverwendenden Hilfs-und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, Flammschutzmittel, Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31 beispielhaft beschrieben sind.

Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte mitverwendet werden können.

Auch Epoxidharze wie beispielsweise die bekannten Polyglycidylether mehrwertiger Phenole wie insbesondere Bisphenol A des Epoxidäquivalentgewichtsbereichs 170 bis 250 können insbesondere im Falle des Einsatzes von aromatischen Diaminen c) als Zusatzmittel mitverwendet werden, wobei der Epoxidharze, bezogen auf die Diamine c), vorzugsweise in unterschüssigen Mengen eingesetzt und mit diesen vorab bei 50 bis 180°C zur Reaktion gebracht werden können.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem man die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen, multipliziert mit 100) bei 60 bis 140, vorzugsweise bei 80 bis 120, insbesondere 95 bis 115.

Wie bereits oben ausgeführt, wird vorzugsweise die Komponente c) (unter Einbeziehung der gegebenenfalls in der Komponente b) vorliegenden Aminogruppen) so bemessen, daß in den Elastomeren das Molverhältnis von Harnstoffgruppen zu Urethangruppen bei mindestens 2:1 liegt. Besonders bevorzugt liegt dieses Verhältnis bei mindestens 5:1. In der Praxis bedeutet dies, daß vorzugsweise die Komponente c) in einer Menge von 5 bis 50, vorzugsweise 10 bis 40 Gew.-%, bezogen auf das Gewicht der Komponente b) eingesetzt wird.

Die Herstellung der Polyisocyanat-Polyadditionsprodukte kann, wie beispielsweise in DE-AS 2 622 951, US-PS 4 218 543 oder EP-B-00 81 701 beschrieben, nach dem Verfahren der Reaktionsspritzgußtechnik in geschlossenen Formen erfolgen, jedoch ist es auch möglich, die Polyisocyanat-Polyadditionsprodukte ohne Mitverwendung von Formen herzustellen, beispielsweise dergestalt, daß man das die Mischapparatur verlassende Reaktionsgemisch auf geeignete Unterlagen, beispielsweise Bleche aufträgt und dort ausreagieren läßt.

Die Polyisocyanat-Polyadditionsprodukte weisen vorzugsweise eine Dichte von 0,8 bis 1,4 insbesondere 1,0 bis 1,3 g/cm$^3$ auf, dies bedeutet, daß die Mitverwendung von Treibmitteln allenfalls in geringen Mengen erfolgt, um eine gewisse mikroporöse Struktur zu erhalten, oder um die Verarbeitbarkeit der Reaktionsgemische zu erleichtern (verbesserte Fließfähigkeit).

Im Falle der Verwendung von mehreren Schichten aus Polyisocyanat-Polyadditionsprodukten der genannten Art bei der Herstellung des der thermoplastischen Formgebung zuzuführenden "Aufbaus" ist es selbstverständlich nicht erforderlich, Polyisocyanat-Polyadditionsprodukte der gleichen chemischen Zusammensetzung miteinander zu kombinieren; es können vielmehr auch Polyisocyanat-Polyadditionsprodukte der genannten Art einer unterschiedlichen chemischen Zusammensetzung im Rahmen der gemachten Ausführungen bei der Herstellung des "Aufbaus" verwendet werden.

Das flächenförmige, erfindungswesentliche Polyisocyanat-Polyadditionsprodukt kann sowohl ohne als auch nach einer thermoplastischen Vorbehandlung zur Herstellung des beim erfindungsgemäßen Verfah-rens einzusetzenden "Aufbaus" verwendet werden. Falls Polyisocyanat-Polyadditionsprodukte der genannten Art ohne thermoplastische Vorbehandlung verwendet werden, wird vorzugsweise bereits bei der Herstellung der Polyisocyanat-Polyadditionsprodukte dafür Sorge getragen, daß sie "flächenförmig" anfallen. Hierunter sind beispielsweise platten- oder folienartige Polyisocyanat-Polyadditionsprodukte der genannten Art zu verstehen, wie sie beispielsweise nach der Reaktionsspritzgußtechnik unter Verwendung von Plattenformen oder dadurch erhalten werden können, daß man das die Mischapparatur verlassende Reaktionsgemisch flächenförmig auf geeignete Unterlagen, beispielsweise Bleche unter Ausbildung von Flächengebilden aufträgt und ausreagieren läßt.

Im Falle einer thermoplastischen Vorbehandlung der Polyisocyanat-Polyadditionsprodukte können diese die unterschiedlichsten Formen aufweisen. So ist es beispielsweise möglich, Platten, die nach dem Prinzip der Reaktionsspritzgußtechnik in geschlossenen Plattenformen hergestellt worden sind, in Tiefziehpressen weiter zu verformen oder in zerkleinerter Form (Granulate oder Pulver) thermoplastisch zu Flächengebilden zu verarbeiten, um diese dann zur Herstellung des beim erfindungsgemäßen Verfahren einzusetzenden "Aufbaus" zu verwenden. Auf diese Weise können auch Granulate, Schnipsel und/oder andere Klein- und Kleinstteile, wie sie beispielsweise bei der bislang erfolgten Herstellung und Verwendung von Formkörpern auf Basis der Polyisocyanat-Polyadditionsprodukte als Nebenprodukte bzw. Abfall anfielen und bislang verbrannt wurden, zu Flächengebilden verarbeitet werden, die dann zur Herstellung des beim erfindungsgemäßen Verfahren einzusetzenden "Aufbaus" verwendet werden.

Die thermoplastische Vorbehandlung der Polyisocyanat-Polyadditionsprodukte erfolgt im allgemeinen bei einem Druck von mindestens 1 bar, vorzugsweise innerhalb des Druckbereichs von 50 bis 400 bar, insbesondere 100 bis 200 bar bei einer Temperatur von mindestens 20°C, vorzugsweise 50 bis 200°C und insbesondere 130 bis 170°C, wobei die Verformungszeiten bei 1 Sekunde bis 10 Minuten liegen können. Selbstverständlich müssen bei ein und demselben Elastomeren bei niederen Drücken innerhalb der genannten Bereiche höhere Temperaturen innerhalb der genannten Bereiche und umgekehrt zur Anwendung gelangen.

Der beim erfindungsgemäßen Verfahren einzusetzende "Aufbau" kann als weitere Kunststoffmaterialien beliebige, vorzugsweise flächenförmige, thermoplastisch verarbeitbare Kunststoffe aufweisen. Beispielsweise können zur Herstellung des "Aufbaus" platten- oder folienförmig vorliegende thermoplastische Polyurethane gemäß Stand der Technik, Polycarbonate, insbesondere auf Bisphenol A/Phosgen-Basis, Polyesterkunststoffe, beispielsweise gegebenenfalls Ether-modifizierte Polyethylen-und/oder Polybutylen-terephthalate, Polyamide, Polyesteramide, Polyolefine wie Polyethylen oder Polypropylen, gegebenenfalls schlagzähmodifizierte Polystyrole, Polyacrylnitrile oder auch Mischpolymerisate wie beispielsweise Acrylnitril-Butadien-Styrol-Mischpolymerisate mitverwendet werden.

Die Kunststoffmaterialien, insbesondere die erfindungswesentlichen Polyisocyanat-Polyadditionsprodukte können bereits Verstärkungs- oder Füllstoffmaterialien, beispielsweise Glas- oder Kohlefasern oder Mica enthalten. Darüber hinaus ist es möglich, bei der Herstellung des beim erfindungsgemäßen Verfahren einzusetzenden "Aufbaus" Unter-, Ober-, und/oder Zwischenschichten aus verstärkend wirkenden Materialien mitzuverwenden.

Als derartige, verstärkend wirkende Schichten sind insbesondere Glasfaser- und/oder Kohlefaser-Matten unterschiedlichster Flächengewichte geeignet. Außerdem kommen beliebige Geflechte, Gewirke, Gestricke, Netze oder Siebe von vorzugsweise anorganischen Materialien wie Glas, Kohle, Kaliumtitanat, Stahl, Eisen, Aluminium oder Titan in Betracht.

Bei der Herstellung des beim erfindungsgemäßen Verfahren einzusetzenden "Aufbaus" können die einzelnen Kunststoffschichten und die gegebenenfalls vorliegenden Schichten aus verstärkend wirkenden Materialien in beliebiger Reihenfolge miteinander kombiniert werden, wobei es auch möglich ist, zunächst aus 2 oder mehreren Schichten, gegebenenfalls zunächst auch ohne erfindungswesentliche Schicht aus "Polyisocyanat-Polyadditionsprodukt", durch thermoplastische Vereinigung einen ersten Verbund herzustellen, und diesen dann mit weiteren Schichten zu einem "Aufbau" zu vereinigen und dem erfindungsgemäßen Verfahren zuzuführen. Der durch das Übereinanderlegen der einzelnen Schichten hergestellte "Aufbau" wird dann der thermoplastischen Formgebung zugeführt, wobei bezüglich der hierbei zu beachtenden Temperatur- und Druckbedingungen die bereits oben gemachten Ausführungen im Zusammenhang mit der thermoplastischen Vorbehandlung der Polyisocyanat-Polyadditionsprodukte Gültigkeit haben. Die Durchführung des erfindungsgemäßen Verfahren kann in an sich bekannten Werkzeugen wie Formpressen, Kalandern oder Tiefziehpressen erfolgen, wobei die zur Durchführung des Verfahrens erforderliche Temperatur durch entsprechende Beheizung des Werkzeugs und/oder durch Vorerhitzen des "Aufbaus" sichergestellt wird.

Das erfindungsgemäße Verfahren gestattet die Herstellung von besonders hochwertigen Verbundkörpern, insbesondere Folienverbunden, die den unterschiedlichsten Verwendungszwecken zugeführt werden können. So eignen sich die erfindungsgemäßen Verbundkörper beispielsweise in Form von Hohlkörpern für Einsätze, Becher, Behälter verschiedener Abmessungen und Inhalte, als Abdeckungen für Armaturentafeln, Schaltkonsolen, für flächenförmige Fahrzeug-Karosserieelemente wie Türblätter, Seitenteile, Kotflügel oder Motorraum- und Kofferraumhauben, sowie Radkappen. In flächer Form eignen sich die Verbundkörper auch für Schreibunterlagen, Anzeigetafeln mit Magnethalterungen, Klebeschildern, Schutzfolien und Beschichtungen für die verschiedensten Zwecke. Erfindungsgemäße Verfahrensprodukte können auch in Form von kleinen, bisher nach dem RIM-Verfahren nicht wirtschaftlich herstellbaren, Formteilen wie Tastaturelementen, hartelastischen Dichtungsteilen und Manschetten, Griffmulden und Griffkörpern, kleinen Dämpfungselementen, Unterleg- und Distanzscheiben Verwendung finden. Die erfindungsgemäßen Verfahrensprodukte können auch zur Herstellung von versteiften oder unversteiften Profilen für Kabelkanäle und Dichtungslippen oder zur Herstellung von beliebigen anderen, massiven kleinen Körpern verwendet werden. Gewünschtenfalls können in die Verbundkörper während ihrer Herstellung nach dem erfindungsgemäßen Verfahren Zusatzstoffe wie beispielsweise UV-Adsorber oder Farbstoffe eingearbeitet werden.

Beispiele

Ausgangsmaterialien:

Aminopolyether I:

Aminopolyether der NH-Zahl 44, hergestellt durch Hydrolyse eines NCO-Prepolymeren bei 90° C unter Verwendung eines Gemischs aus 3,5 Gew.-Teilen Dimethylformamid, 0,1 Gew.-%-Teilen Natriumhydroxid und 100 Gew.-Teile Wasser pro 1000 Gew.-Teilen des Prepolymeren und anschließender destillative Entfernung der flüchtigen Bestandteile. Das NCO-Prepolymer wies einen NCO-Gehalt von 3,4 % auf und wurde durch Umsetzung von 2,4-Diisocyanatotoluol mit einer unterschüssigen Menge eines Polyethergemischs erhalten. Das Polyethergemisch bestand zu gleichen Gewichtsteilen aus (i) dem Propoxylierungsprodukt der OH-Zahl 56 und der OH-Funktionalität 2,4 eines Gemischs aus Wasser und Trimethylolpropan und (ii) einem Polyetherpolyol der OH-Zahl 35, hergestellt durch Propoxylierung von Glycerin und anschließende Ethoxylierung des Propoxylierungsprodukts (Gewichtsverhältnis PO:EO = 87 : 13).

Polyetherpolyole I:

Polyethertriol der OH-Zahl 28, hergestellt durch Propoxylierung von Trimethylolpropan und anschließende Ethoxylierung des Propoxylierungsprodukts (PO:EO-Gewichtsverhältnis = 83 : 17).

Polyisocyanat I:

Handelsübliches, Polyester-modifiziertes 4,4'-Diisocyanatodiphenylmethan mit einem NCO-Gehalt von 19 Gew.-% (® Desmodur M53, Hersteller: Bayer AG, Leverkusen).

Polyisocyanat II:

Modifiziertes Polyisocyanat mit einem NCO-Gehalt von 24,5 %, hergestellt durch Umsetzung von 4,4'-Diisocyanatodiphenylmethan mit einer unterschüssigen Menge an Tripropylenglykol.

Polyisocyanat III:

Polyisocyanatgemisch der Diphenylmethanreihe mit einem NCO-Gehalt von 31 Gew.-%, bestehend aus 66 Gew.-% 4,4'-Diisocyanatodiphenylmethan, 2 Gew.-% 2,4-Diisocyanatodiphenylmethan und 32 Gew.-% an höherfunktionellen Polyisocyanaten.

DETDA:

Gemisch aus 65 Gew.-Teilen 1-Methyl-3,5-diethyl-2,4-diaminobenzol und 35 Gew.-Teilen 1-Methyl-3,5-diethyl-2,6-diaminobenzol.

Epoxid-modifiziertes DETDA:

Umsetzungsprodukt von 26 Gew.-Teilen DETDA mit 4 Gew.-Teilen eines Bisphenol A-diglycidylethers des Epoxidäquivalentgewichts 190 bei 100° C.

Stabilisator I:

Handelsübliches Polyetherpolysiloxan (L 5304 der Firma Union Carbide).

Inneres Formtrennmittel I:

Gemisch aus gleichen Gewichsteilen (i) Zinkstearat und (ii) dem Anlagerungsprodukt von 5 Mol Propylenoxid an 1 Mol Ethylendiamin.

Inneres Formtrennmittel II:

Polyricinolsäjure einer unter 5 liegenden Säurezahl.

Katalysator I:

Triethylendiamin, 33 gew.-%ige Lösung in Tripropylenglykol (®DABCO 33 LV der Firma Air Products).

Katalysator II:

Handelsüblicher Zinnkatalysator (UL 28 der Firma Witco Co.).

Thermoplastisches Polyurethan:

Handelsübliches thermoplastisches Polyurethan gemäß Stand der Technik (®Desmopan 385 der Firma Bayer AG, Leverkusen).

Verstärkungsmittel I:

Glasfasern einer mittleren Länge von ca. 100 bis 300 $\mu$m und eines mittleren Durchmessers von ca. 14 $\mu$m ("milled fibre MF 7901" der Bayer AG, Leverkusen).

Verstärkungsmittel II:

1/64-Glasflakes der Firma Owens-Corning Co.

Herstellung von Polyisocyanat-Polyadditionsprodukten (Beispiele 1 bis 6)

Allgemeine Verfahrensbedingungen (Beispiele 1 bis 3):

Die nachstehend in den Beispielen 1 bis 3 genannten Rezepturen wurden wie folgt verarbeitet:
Machine: Laborkolbendosiergerät;
Form: Plattenform aus Stahl der inneren Abmessung 300 x 200 x 4 mm;
Mischkopf: MQ 8 der Firma Hennecke, Sankt Augustin;
Arbeitsdruck: 180 bar:
Einfüllzeit: 1 Sekunde;
Rohstoff-Temperaturen: 65°C (A-Komponente) bzw. 50°C (B-Komponente);
Formtemperatur; 70°C;
Formstandzeit: 30 Sekunden;
äußeres Formtrennmittel: RCTW 2006 der Firma Chemtrend.

Allgemeine Verfahrensbedingungen (Beispiele 4 bis 6):

Die in den nachstehenden Beispielen 4 bis 6 genannten Rezepturen wurden unter weitgehend analogen Verfahrensbedingungen verarbeitet, wobei jedoch die Rohstofftemperatur bei 35 bzw. 40°C, die Formtemperatur bei 60°C, die Einfüllzeit bei 1,25 Sekunden und die Formstandzeit ebenfalls bei 30 Sekunden lag.

Beispiel 1

| A-Komponente: | |
|---|---|
| 58,6 Gew.-Teile | Aminopolyether I, |
| 28,8 Gew.-Teile | DETDA, |
| 0,9 Gew.-Teile | Stabilisator I, |
| 5,6 Gew.-Teile | inneres Formtrennmittel I, |
| 6,1 Gew.-Teile | inneres Formtrennmittel II. |

B-Komponente:

Polyisocyanat I
Gewichtsverhältnis A:B = 100:99 (Kennzahl: 110).

Beispiel 2

A-Komponente:

Wie Beispiel 1, jedoch in Abmischung mit 50 Gew.-%, bezogen auf Verstärkungsmittel-freie A-Komponente, Verstärkungsmittel I.

B-Komponente:

Wie Beispiel 1.
Gewichtsverhältnis A:B = 100:66 (Kennzahl: 110).

Beispiel 3

A-Komponente:

Wie Beispiel 1, jedoch in Abmischung mit 50 Gew.-%, bezogen auf Verstärkungsmittel-freie A-Komponente, Verstärkungsmittel II.

B-Komponente:

Wie Beispiel 1.
Gewichtsverhältnis A:B - 100:66 (Kennzahl: 110).

Beispiel 4

| A-Komponente: | |
|---|---|
| 77 Gew.-Teile | Polyetherpolyol I, |
| 23 Gew.-Teile | DETDA, |
| 0,3 Gew.-Teile | Katalysator I, |
| 0,1 Gew.-Teile | Katalysator II. |

B-Komponente:

Polyisocyanat II
Gewichtsverhältnis A:B = 100:51 (Kennzahl = 100).

Beispiel 5

| A-Komponente: | |
|---|---|
| 62 Gew.-Teile | Aminopolyether I, |
| 26 Gew.-Teile | Epoxid-modifiziertes DETDA, |
| 1,0 Gew.-Teile | Stabilisator I, |
| 6 Gew.-Teile | inneres Formtrennmittel I, |
| 5 Gew.-Teile | inneres Formtrennmittel II, |
| 41 Gew.-Teile | Verstärkungsmittel I. |

B-Komponente:

Gemisch aus gleichen Gewichtsteilen Polyisocyanat I und Polyisocyanat III, NCO-Gehalt des Gemischs: 25 Gew.-%
Gewichtsverhältnis A:B = 100:45 (Kennzahl = 110).

Beispiel 6

| A-Komponente: | |
|---|---|
| 60 Gew.-Teile | Aminopolyether I, |
| 28,5 Gew.-Teile | DETDA, |
| 5,8 Gew.-Teile | inneres Formtrennmittel I, |
| 4,7 Gew.-Teile | inneres Formtrennmittel II, |
| 1 Gew.-Teil | Stabilisator I. |

B-Komponente:

Wie Beispiel 5.
Gewichtsverhältnis A:B = 100:68 (Kennzahl = 110).

In allen vorhergehenden Beispielen wurden jeweils die A-Komponente mit der B-Komponente unter Verwendung der angegebenen Maschine innig vermischt und zu Platten der angegebenden Dimension verarbeitet. Die Dichte der ungefüllten Polyisocyanat-Polyadditionsprodukte lag bei ca. 1,10 g/cm$^3$ , die der Verstärkungsmittel enthaltenden Produkte bei ca. 1,25 g/cm$^3$ .

Erfindungsgemäßes Verfahren (Beispiele 7 bis 16)

Beispiel 7

Ausgehend von 4 mm dicken Platten gemäß Beispiel 1 wurden in einer entsprechend beheizten Formpresse bei einer Temperatur 160°C und einem Druck von 200 bar Preßlinge der Dicke 2 mm hergestellt.

Jeweils 2 dieser Preßlinge wurden zu einem zweifachen "Aufbau" übereinandergelegt und im gleichen Werkzeug bei einer Preßzeit von 2 Minuten, einer Preßtemperatur von 150°C und einem Preßdruck von 40 bar zu einem 2-fach-Laminat der Dicke 4 mm verpreßt.

9

Jeweils 2 dieser 2-fach-Laminate wurden unter den erstgenannten Bedingungen zu einem 4-fach-Laminat der Dicke 4 mm verpreßt.

Jeweils 2 dieser 4-fach-Laminate wurden unter gleichen Bedingungen zu einem 8-fach-Laminat der Dicke 4 mm verpreßt.

Die Dicken der Laminate wurden beim Verpressen jeweils durch entsprechende Abstandhalter vorgegeben. Die Eigenschaften der so erhaltenen Laminate werden in folgender Tabelle mitgeteilt:

| | 1-fach | 2-fach | 4-fach | 8-fach |
|---|---|---|---|---|
| | Laminat | | | |
| Zugfestigkeit | 41 MPa | 44 MPa | 40 MPa | 70 MPa |
| Bruchdehnung | 240 % | 84 % | 80 % | 33 % |
| G'-Modul 100 C | 175 MPa | 180 MPa | 165 MPa | 170 MPa |
| Biege-E-Modul 120 C | 486 MPa | 540 MPa | 495 MPa | 495 MPa |
| Härte Shore A | 79 | 80 | 79 | 80 |

Beispiel 8

Unter den in Beispiel 7 genannten Temperatur- und Druckbedingungen wurde ein 3-facher Aufbau aus Platten gemäß den Beispielen 1 und 2 der Struktur 1/2/1 zu einem 3-fach-Laminat der Dicke 4 mm verpreßt.

Der Kern des so erhaltenen Laminats besteht somit aus glasfasergefülltem Polyisocyanat-Polyadditionsprodukt, während die Ober- und Unterschicht aus nichtgefülltem Material besteht. Die Oberfläche eines solchen Laminats ist sehr viel glatter als konventionell hergestellte, glasfasergefüllte RIM-Produkte. Der G'-Modul und Biege-E-Modul des Laminats entspricht annähernd den in Beispiel 7 mitgeteilten Werten.

Beispiel 9

Entsprechend Beispiel 8 wurde ein Laminat aus den Platten gemäß Beispielen 1 und 3 der Struktur 1 3 1 hergestellt. Das erhaltene 3-fach-Laminat der Dicke 4 mm besitzt als Kern ein glasflakesgefülltes Polyisocyanat-Polyadditionsprodukt und als Ober- und Unterschicht ein ungefülltes Produkt. Die Oberflächen derartiger Laminate sind sehr viel glatter als die Oberflächen von konventionell nach dem RIM-Verfahren hergestellten, glasflakesgefüllten Formkörpern. Das Laminat weist eine Bruchdehnung von 120 % und eine Bruchfestigkeit von 40 Mpa auf.

Beispiel 10

Entsprechend Beispiel 8 wurde aus den Platten gemäß Beispielen 3 und 4 ein 3-fach-Laminat der Struktur 3/4/3 der Dicke 4 mm hergestellt.

Das so erhaltene Laminat weist eine glatte Oberfläche und einen visuellen Effekt, wie er von Metallic-Lackierungen bekannt ist, auf.

Beispiel 11

Unter den in Beispiel 8 genannten Temperatur- und Druckbedingungen wurde aus Platten gemäß Beispielen 4 und 5 ein 2-fach-Laminat mit sehr glatter Oberfläche und einem Metalliclack-ähnlichen Erscheinungsbild hergestellt.

Beispiel 12

Ein feinmaschiges Metallsieb der Dicke 0,13 mm mit 0,1 mm großen freien Öffnungen wurde zwischen 2 Platten der Dicke 2 mm aus thermoplastischem Polyurethan gemäß Stand der Technik gelegt und während 2 Minuten bei 40 bar und 150°C in einer Presse eingesiegelt.

Aus Platten gemäß Beispiel 6 wurden bei einem Druck von 100 bar und einer Temperatur von 150°C während einer Preßzeit von 2 Minuten Platten der Dicke 1 mm hergestellt.

Je eine dieser Platten wurde als Ober- bzw. Unterschicht mit dem Polyurethan-versiegelten Metallsieb zu einem "Aufbau" vereinigt und anschließend während einer Preßdauer von 2 Minuten, einer Temperatur von 150°C und einem Preßdruck von 40 bar zu einem 3-fach-Laminat der Dicke 3 mm verpreßt.

Beispiel 13

Beispiel 12 wird wiederholt, jedoch unter Verwendung eines Aluminium-Loch-Blechs der Dicke 1 mm anstelle des Metallsiebs. Es wird ebenfalls ein Metall-verstärktes 3-fach-Laminat erhalten.

Beispiel 14

Beispiel 12 wird wiederholt, jedoch unter Verwendung eines Glasfasergewebes der Dicke 1 mm anstelle des Metallsiebs. Es wird ebenfalls ein verstärktes 3-fach-Laminat erhalten.

Beispiel 15

Ein Gemäß Beispiel 10 erhaltenes 3-fach-Laminat der Abmessung 20 x 30 x 4 mm wurde in einer Formpresse unter Verwendung einer Kastenform der Abmessung 20 x 50 x 10 mm bei 150°C, 100 bar und einer Preßzeit von 2 Minuten zu einem entsprechend dimensionierten Kasten mit einer Wandstärke von 1 mm verpreßt. Das überstehende Material wurde abgeschnitten.

Beispiel 16

Ausgehend von einer 4 mm dicken Platte gemäß Beispiel 1 und einer 2 mm dicken Platte aus ABS wurde in einer Formpresse bei 160°C und 200 bar eine 1 mm dicke Laminatplatte hergestellt. Im Unterschied zu den vorhergehenden erfindungsgemäßen Beispielen erfolgte hierbei die Erhitzung der Einzelplatten auf die Preßtemperatur durch Vorerhitzen in einem Heizschrank während eines Zeitraums von 10 Minuten.

**Ansprüche**

1. Verfahren zur Herstellung von Verbundkörpern durch thermoplastische Formgebung eines Aufbaus, bestehend aus mindestens zwei schichtweise übereinanderliegenden, flächenförmigen, thermoplastisch verformbaren Kunststoffmaterialien und gegebenenfalls mindestens einer Ober-, Unter- und/oder Zwischenschicht aus einem Verstärkungs- oder Füllstoffmaterial unter solchen Temperatur- und Druckbedingungen, daß die Formgebung unter gleichzeitig ablaufender, inniger Vereinigung der einzelnen Schichten des Aufbaus stattfindet, dadurch gekennzeichnet, daß mindestens eines der flächenförmigen Kunststoffmaterialien aus einem Polyisocyanat-Polyadditionsprodukt einer Dichte von mindestens 0,8 g/cm$^3$ besteht, welches durch Umsetzung von
a) aromatischen Polyisocyanaten,
b) Verbindungen mit einem Molekulargewicht zwischen 1800 und 12 000, welche im statistischen Mittel mindestens 2,5 gegenüber Isocyanatgruppen reaktionsfähige Gruppen aufweisen,
gegebenenfalls
c) Diaminen mit zwei primären und/oder sekundären, aromatisch gebundenen Aminogruppen des Molekulargewichtsbereichs 108 bis 400,
sowie gegebenenfalls
d) gegebenenfalls Ethergruppen aufweisenden (Cyclo)-alkanpolyolen und/oder (Cyclo)-alkanpolyaminen des Molekulargewichtsbereichs 60 bis 1799,
sowie gegebenenfalls unter Mitverwendung von
e) den aus der Polyurethanchemie an sich bekannten Hilfs- und Zusatzmitteln,

11

unter Einhaltung einer Isocyanatkennzahl von 60 bis 140 im Ein- oder Mehrstufenverfahren hergestellt worden ist, mit der Maßgabe, daß mindestens eine der Komponenten c) oder d) in einer solchen Menge mitverwendet wird, daß die Gesamtmenge der Komponenten c) und d) mindestens 5 Gew.-%, bezogen auf das Gewicht der Komponente b) beträgt.

2. Verfahren gemäß Anspruch 1, dadurch gekennzeichnet, daß es sich bei den Kunststoffmaterialien ausschließlich um gleiche oder verschiedene Polyisocyanat-Polyadditionsprodukte der in Anspruch 1 genannten Art handelt.

3. Verfahren gemäß Anspruch 1 und 2, dadurch gekennzeichnet, daß man als Verstärkungs- oder Füllstoffmaterial Glasfaser- und/oder Kohlefasermatten verwendet.

4. Verfahren gemäß Anspruch 1 bis 3, dadurch gekennzeichnet, daß man die thermoplastische Formgebung bei Temperaturen von 50 bis 200° C und Drücken von 50 bis 400 bar durchführt.

5. Verfahren gemäß Anspruch 1 bis 4, dadurch gekennzeichnet, daß die flächenförmigen Kunststoffmaterialien eine Dicke von 0,01 bis 10 mm aufweisen und, gegebenenfalls im Verbund mit verstärkend wirkenden Ober-, Unter- und/oder Zwischenschichten aus Verstärkungsmaterialien zu Laminaten einer Dicke von 0,1 bis 30 mm verpreßt werden.

6. Gemäß Anspruch 1 bis 5 erhältliche Verbundkörper.